# EUROPEAN PATENT APPLICATION

(11) **EP 4 450 567 A1**
(43) Date of publication of application: **23.10.2024**
(21) Application number: 22907745.8
(22) Date of filing: 21.11.2022
(51) Int. Cl.: C09C 3/06, C09C 1/00, C09D 5/33, C09D 17/00

(54) **EFFECT PIGMENT HAVING NEAR-INFRARED REFLECTION FUNCTION, AND PAINT AND PANEL USING SAME**

(30) Priority: 16.12.2021 KR 20210180527
(71) Applicant: Cqv Co., Ltd., Jincheon-gun, Chungcheongbuk-do 27845 (KR)
(72) Inventor: HEO, Dong-Min, Jincheon-gun Chungcheongbuk-do 27872 (KR); JEONG, Jae-Il, Cheongju-si Chungcheongbuk-do 28315 (KR); KANG, Kwang-Choong, Cheongju-si Chungcheongbuk-do 28325 (KR); CHOI, Byung-Ki, Cheongju-si Chungcheongbuk-do 28123 (KR); LIM, Kwang-Soo, Cheongju-si Chungcheongbuk-do 28315 (KR); CHANG, Kil-Wan, Cheongju-si Chungcheongbuk-do 28162 (KR)
(74) Representative: AWA Sweden AB
(86) International application number: PCT/KR2022/018417
(87) International publication number: WO 2023/113275

(57) **Abstract**

Disclosed in the present invention are near-infrared reflecting functional pigment, paint, and panel, especially, used for a vehicle pigment or the like. The pigment according to the present invention comprises: a platelet-like substrate; a first metal oxide layer coated on at least a portion of the substrate and having a refractive index of 1.8 or larger, and a second metal oxide layer coated on at least a portion of the first metal oxide layer and containing an absorbent material, wherein the pigment reflects on average at least 30% of an IR electron beam of 850-950 nm.

## Description

### FIELD

The present disclosure relates to an effect pigment having a near-infrared reflection function, and more particularly, to the pigment, and a paint and a panel applied to a vehicle and the like using the same.

### DESCRIPTION OF RELATED ART

An effect pigment is used in various fields of industry, especially in fields of automobiles, decorative coatings, plastics, paints, printing inks and in cosmetic formulations.

Among the various fields mentioned above, the effect pigment is used in a paint for a vehicle such as the automobile, and a pigment of a dark color such as black is also used in the paint for the vehicle in addition to a pigment of a bright color such as pearl gray.

Recently, in the automobile industry, research on a vehicle capable of autonomous driving is being actively conducted. Such autonomous vehicle uses sensors such as a camera, an ultrasonic sensor, a Radar, and a LiDAR to recognize surrounding elements, and expansion of the autonomous driving is being aimed based on contents recognized via such system. Among such sensing technologies, the LiDAR system, as a three-dimensional recognition system that has a relatively shorter recognition distance than the Radar system, but has resolution improved compared to that of the Radar system for a surrounding environment within an appropriate distance, is characterized in using a laser with a wavelength of about 905 nm as a light source.

However, the dark color pigments used in the paints applied to a general dark color vehicle have properties of absorbing light in a near-infrared band containing the wavelength of 905 nanometers used as LiDAR light along with light in a visible band perceived by the eye because of general optical properties thereof. Because of such light absorbing properties, existing vehicles painted in the dark color have significantly low efficiency of recognition via the LiDAR sensor, which is currently becoming a major obstacle in implementing the autonomous driving.

### DISCLOSURE

### TECHNICAL PURPOSES

A purpose of the present disclosure is to propose a new pigment of a dark color for a LiDAR system that effectively reflects LiDAR light although it is the pigment of the dark color by rendering the dark color via low reflectance for a visible band and effectively reflecting the LiDAR light in a near-infrared band.

### TECHNICAL SOLUTIONS

A near-infrared reflective functional effect pigment according to one embodiment of the present disclosure for achieving the above purpose includes a platelet-shaped substrate, a first metal oxide layer coated on at least a portion of the substrate and having a refractive index equal to or greater than 1.8, and a second metal oxide layer coated on at least a portion of the first metal oxide layer and containing an absorbent material, and the pigment reflects IR electron rays in a range from 850 to 950 nm in an amount equal to or greater than 30 % on average.

Preferably, the first metal oxide layer may contain Fe₂O₃, the second metal oxide layer may contain Co₃O₄, and a ratio of a content of Fe contained in the first metal oxide layer to a content of Co contained in the second metal oxide layer may be in a range from 1:0.5 to 1:1.

More preferably, the first metal oxide layer may contain TiOz and SnOz, the second metal oxide layer may contain CuO, and a ratio of contents of Ti and Sn contained in the first metal oxide layer to a content of Cu contained in the second metal oxide layer may be in a range from 1:4 to 1:6.

More specifically, the pigment may have a blackness L* equal to or smaller than 35, and the pigment may reflect visible electron rays in an amount equal to or smaller than 15 % on average.

In addition, a paint according to another embodiment of the present disclosure for achieving the above purpose includes a binder, and a near-infrared reflective functional pigment, the pigment includes a platelet-shaped substrate, a first metal oxide layer coated on at least a portion of the substrate and having a refractive index equal to or greater than 1.8, and a second metal oxide layer coated on at least a portion of the first metal oxide layer and containing an absorbent material, and the pigment reflects IR electron rays in a range from 850 to 950 nm in an amount equal to or greater than 30 % on average.

As described above, the pigment applied to the paint may have a blackness L* equal to or smaller than 35, and may reflect visible electron rays in a range from 400 to 700 nm in an amount equal to or smaller than 15 % on average.

In addition, the platelet-shaped substrate may be a plate-shaped material containing at least one selected from a group consisting of synthetic mica, natural mica, glass flake, plate-shaped glass, plate-shaped iron oxide, plate-shaped alumina, plate-shaped silica, plate-shaped aluminum, and plate-shaped TiOz.

In addition, a panel according to another embodiment of the present disclosure for achieving the above purpose is a panel coated with a near-infrared reflective functional paint, the paint includes a binder and a near-infrared reflective functional pigment, the pigment includes a platelet-shaped substrate, a first metal oxide layer coated on the substrate and having a refractive index equal to or greater than 1.8, and a second metal oxide layer coated on the first metal oxide layer and containing an absorbent material, the pigment reflects IR electron rays in a range from 850 to 950 nm in an amount equal to or greater than 30 % on average, and the panel is able to be detected by a light detection and ranging (LiDAR).

### TECHNICAL EFFECTS

The near-infrared reflective functional pigment according to the present disclosure reflects the IR electron rays in the range from 850 to 950 nm in the amount equal to or greater than 30 % on average, and preferably has the reflectance equal to or greater than 30 % at 905 nm, which is the wavelength of the light of the LiDAR sensor, thereby having the effect detectable by the light detection and ranging (LiDAR).

In particular, the pigment according to the present disclosure reflects the IR electron rays in the range from 850 to 950 nm in the amount equal to or greater than 30 % on average and reflects the visible electron rays in the range from 400 to 700 nm in the amount equal to or smaller than 15 % on average even with the dark color with the blackness L* equal to or smaller than 35, thereby having the effect detectable by the light detection and ranging (LiDAR).

### BRIEF DESCRIPTION OF DRAWINGS

FIG. 1 is a cross-sectional view schematically showing a structure of a pigment according to the present disclosure.
FIGS. 2 to 4 are SEM pictures of pigments according to Present Examples of the present disclosure.
FIG. 5 is a graph showing reflection properties of pigments according to Present Examples of the present disclosure.

### DETAILED DESCRIPTIONS

Advantages and features of the present disclosure, and how to achieve them will become apparent with reference to the embodiments described below in detail in conjunction with the accompanying drawings.

However, the present disclosure is not limited to the embodiments as disclosed below, but will be implemented in a variety of different forms. Only these embodiments make the present disclosure complete, and are constructed to fully inform those having common knowledge in the technical field to which the present disclosure belongs of a scope of the disclosure. The scope of the present disclosure is only defined by the scope of the claims.

Hereinafter, a functional pigment, a paint, and a panel according to an embodiment of the present disclosure will be described in detail.

### Near-infrared reflective functional pigment

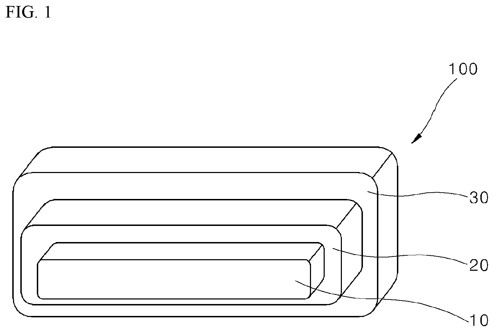

Referring to FIG. 1, a near-infrared reflective functional pigment 100 according to the present disclosure includes: a platelet-shaped substrate 10; a first metal oxide layer 20 coated on at least a portion of the substrate 10 and having a refractive index equal to or greater than 1.8; and a second metal oxide layer 30 coated on at least a portion of the first metal oxide layer 20 and containing an absorbent material, and reflects IR electron rays in a range from 850 to 950 nm in an amount equal to or greater than 30 % on average.

In the present disclosure, near-infrared rays refer to the IR electron rays having a wavelength in the range from 850 to 950 nm. In addition, average reflectance means an arithmetic average value of reflectance for the IR electron rays in the certain range.

The present disclosure relates to the pigment 100 that reflects the near-infrared rays in the amount equal to or greater than 30 % on average as described above, and most preferably, has reflectance equal to or greater than 30 % at 905 nm, which is a wavelength of light of a LiDAR sensor.

The platelet-shaped substrate 10 used in the pigment 100 according to the present disclosure is not particularly limited in a type. A plate-shaped material containing at least one of synthetic mica, natural mica, glass flake, plate-shaped glass, plate-shaped iron oxide, plate-shaped alumina, plate-shaped silica, plate-shaped aluminum, and plate-shaped TiOz may be used for the platelet-shaped substrate 10.

Next, in the pigment 100 according to the present disclosure, the first metal oxide layer 20 is coated on at least the portion of the platelet-shaped substrate 10, and the first metal oxide layer 20 has the refractive index equal to or greater than 1.8.

In this regard, the fact that the first metal oxide layer 20 is coated on at least the portion of the platelet-shaped substrate 10 means that the first metal oxide layer 20 may be coated on an entirety of the platelet-shaped substrate 10, the first metal oxide layer 20 may be coated on only at least the portion of the platelet-shaped substrate 10, or the first metal oxide layer 20 may be coated on the platelet-shaped substrate 10 in an island shape.

The first metal oxide layer 20 functions to improve reflection efficiency for visible rays and the near-infrared rays compared to that of the platelet-shaped substrate 10 and to provide stability in a preparation process of the pigment 100.

Any metal oxide contained in the first metal oxide layer 20 may be used without limitation as long as it has a high refractive index equal to or greater than 1.8, but preferably, the first metal oxide layer may contain at least one selected from a group consisting of Fe₂O₃, SnO₂, and TiOz. More specifically, the first metal oxide layer 20 may contain one selected from the group consisting of Fe₂O₃, SnO₂, and TiOz alone or contain a mixture of two or more among them.

Next, in the pigment 100 according to the present disclosure, the second metal oxide layer 30 is coated on the first metal oxide layer 20, and the second metal oxide layer 30 contains the absorbent material.

In this regard, the fact that the second metal oxide layer 30 is coated on at least the portion of the first metal oxide layer 20 means that the second metal oxide layer 30 may be coated on an entirety of the first metal oxide layer 20, the second metal oxide layer 30 may be coated on only at least the portion of the first metal oxide layer 20, or the second metal oxide layer 30 may be coated on the first metal oxide layer 20 in an island shape.

The absorbent material refers to an absorbent material that absorbs the visible rays, and in particular, refers to a material that acts such that the pigment may have a dark color.

In the present disclosure, the dark color means a dark color with a blackness L* equal to or smaller than 35. As such, the pigment according to the present disclosure contains the absorbent material to have the dark color.

The absorbent material used in the present disclosure is not limited as long as it is a material that allows the pigment to have the dark color as described above, but preferably, the absorbent material may contain at least one selected from a group consisting of Co₃O₄ and CuO.

According to one embodiment of the present disclosure, the first metal oxide layer contains Fe₂O₃, the second metal oxide layer contains Co₃O₄, and a ratio of a content of Fe contained in the first metal oxide layer and a content of Co contained in the second metal oxide layer is preferably in a range from 1:0.5 to 1:1.

In the content ratio of the components, in a case in which the content of Co contained in the second metal oxide layer 30 is smaller than 0.5 when the content of Fe contained in the first metal oxide layer 20 is 1, the blackness L* of the pigment is low, so that there is a problem that the pigment has a red or dark red color.

Conversely, in the above component ratio, in a case in which the content of Co contained in the second metal oxide layer 30 exceeds 1 when the content of Fe contained in the first metal oxide layer 20 is 1, as near-infrared ray reflecting properties of the pigment decrease, there is a problem in that LiDAR reflection properties are not exhibited.

In other words, when the first metal oxide layer 20 contains Fe₂O₃ and the second metal oxide layer 30 contains Co₃O₄, it is preferable that the content ratio of Fe contained in the first metal oxide layer 20 and Co contained in the second metal oxide layer 30 satisfies the range from 1:0.5 to 1:1 in consideration of properties of Fe and Co.

According to another embodiment of the present disclosure, the first metal oxide layer 20 contains TiOz and SnOz, the second metal oxide layer 30 contains CuO, and a ratio of contents of Ti and Sn contained in the first metal oxide layer 20 and a content of Cu contained in the second metal oxide layer 30 is preferably in a range from 1:4 to 1:6.

In the content ratio of the components, in a case in which the content of Cu contained in the second metal oxide layer 30 is smaller than 4 when the contents of Ti and Sn contained in the first metal oxide layer 20 is 1, as the blackness L* increases, there is a problem in that the dark color of the pigment is difficult to be exhibited.

Conversely, in the above component ratio, in a case in which the content of Cu contained in the second metal oxide layer 30 exceeds 6 when the contents of Ti and Sn contained in the first metal oxide layer 20 is 1, as the near-infrared ray reflecting properties of the pigment decrease, there is the problem in that the LiDAR reflection properties are not exhibited.

In summary, when the first metal oxide layer 20 contains TiOz and SnO₂ and the second metal oxide layer 30 contains CuO, it is preferable that the content ratio of Ti and Sn contained in the first metal oxide layer 20 and Cu contained in the second metal oxide layer 30 satisfies the range from 1:4 to 1:6 in consideration of properties of Ti, Sn, and Cu.

In addition, preferably, the near-infrared reflective functional pigment 100 according to the present disclosure may have the blackness L* equal to or smaller than 35 and may reflect visible electron rays in an amount equal to or smaller than 15 % on average.

In this regard, average reflectance means an arithmetic average value of reflectance for the visible electron rays in a certain range.

As such, the pigment according to the present disclosure may exhibit the effect of reflecting a great amount of near-infrared rays as described above while having relatively small blackness L*.

As mentioned above, the pigment 100 according to the present disclosure reflects the IR electron rays in the range from 850 to 950 nm in the amount equal to or greater than 30 % on average, and preferably has reflectance equal to or greater than 30 % at 905 nm, which is the wavelength of the light of the LiDAR sensor, while having the dark color, thereby being detectable by the LiDAR.

### Near-infrared reflective functional paint

Next, a near-infrared reflective functional paint according to the present disclosure to which the above-described pigment is applied will be described.

The paint according to the present disclosure includes: a binder; and a near-infrared reflective functional pigment. The pigment includes a platelet-shaped substrate, a first metal oxide layer coated on at least a portion of the substrate and having a refractive index equal to or greater than 1.8, and a second metal oxide layer coated on at least a portion of the first metal oxide layer and containing an absorbent material, and the pigment reflects IR electron rays in a range from 850 to 950 nm in an amount equal to or greater than 30 % on average.

A known paint binder may be used as the binder, and examples thereof may include an enamel paint binder, a urethane paint binder, and a composite enamel-urethane paint binder.

In addition, as mentioned above, the near-infrared reflective functional pigment reflects the IR electron rays in the range from 850 to 950 nm in the amount equal to or greater than 30 % on average, and preferably has reflectance equal to or greater than 30 % at 905 nm, which is the wavelength of the light of the LiDAR sensor, while having the dark color, thereby being detectable by the LiDAR.

### Panel

Next, a panel according to the present disclosure to which the above-described paint is applied will be described.

The panel according to the present disclosure is a panel coated with a near-infrared reflective functional paint. The paint includes a binder and a near-infrared reflective functional pigment. The pigment includes a platelet-shaped substrate, a first metal oxide layer coated on at least a portion of the substrate and having a refractive index equal to or greater than 1.8, and a second metal oxide layer coated on at least a portion of the first metal oxide layer and containing an absorbent material, and the pigment reflects IR electron rays in a range from 850 to 950 nm in an amount equal to or greater than 30 % on average. The panel may be detected by the light detection and ranging (LiDAR).

As described above, the near-infrared reflective functional pigment reflects the IR electron rays in the range from 850 to 950 nm in the amount equal to or greater than 30 % on average, and preferably has reflectance equal to or greater than 30 % at 905 nm, which is the wavelength of the light of the LiDAR sensor, while having the dark color. As the paint to which the pigment is applied is coated, the panel according to the present disclosure may be detected by the light detection and ranging (LiDAR) even though a surface thereof is coated in the dark color.

In particular, the panel according to the present disclosure may be applied to an exterior of the vehicle. Accordingly, the pigment, the paint, and the panel according to the present disclosure may be suitably used for an autonomous driving system.

### Present Examples

Hereinafter, a composition and an operation of the present disclosure will be described in more detail with preferred Present Examples of the present disclosure. However, these are presented as preferred examples of the present disclosure and cannot be construed as limiting the present disclosure in any way.

Contents not described herein may be technically inferred by those skilled in the art, so that descriptions thereof will be omitted.

### 1. Present Example 1

100 g of the platelet-shaped substrate (the synthetic mica) was dispersed at around 9 % in water and a temperature thereof was raised to a temperature between 70 and 80 °C. A dilute solution of iron salt was added dropwise to the dispersed substrate in the heated state along with counter ions such that pH thereof is maintained in a range from 2.5 to 3.5. In this regard, a coated amount of the iron salt was about 33 to 43 % based on iron oxide, and coating was carried out within the above range until the pigment exhibits a desired color. Thereafter, a dilute solution of cobalt salt was added dropwise to the product along with counter ions such that pH thereof is in a range from 8.0 to 9.5, which is a basic condition. In this regard, a coated amount of cobalt was adjusted to be about 25 to 35 % based on oxide to obtain the pigment with the desired color. To obtain the pigment from the reaction solution, the reaction solution was washed with water, dehydrated, and heat-treated at 800°C.

In the pigment according to Present Example 1 prepared as above, Fe₂O₃ is coated on the platelet-shaped substrate (the synthetic mica), and Co₃O₄ is coated on the Fe₂O₃.

In addition, in the pigment according to Present Example 1, a content of Fe is 30.70 %, and a content of Co is 24.20 % with respect to a total amount of pigment.

### 2. Present Example 2

100 g of the platelet-shaped substrate (the plate-shaped alumina) was dispersed at around 9 % in water and a temperature thereof was raised to a temperature between 70 and 80°C. Dilute solutions of tin salt and titanium salt were added dropwise to the dispersed substrate in the heated state along with counter ions such that pH thereof is in a range from 1.0 to 2.0. In this regard, the dilute solutions of tin salt and titanium salt were added dropwise such that a coated amount of tin oxide is about 0 to 3 % and a coated amount of titanium dioxide is 5 to 10 % based on oxides for the pigment to exhibit a desired color. Thereafter, a dilute solution of copper salt was added dropwise to the product along with counter ions such that pH thereof is in a range from 7.0 to 9.0, which is a basic condition, from a neutral condition. In this regard, copper oxide was coated within an amount of about 20 to 40 % based on the copper oxide for the pigment to exhibit the desired color. To obtain the pigment from the reaction solution, the reaction solution was washed with water, dehydrated, and heat-treated at 800 °C.

In the pigment according to Present Example 2 prepared as above, the mixture of TiOz and SnOz is coated on the platelet-shaped substrate (the plate-shaped alumina), and CuO is coated on the mixture layer.

In addition, in the pigment according to Present Example 2, a content of Ti is 5.46 %, a content of Sn is 0.64 %, and a content of Cu is 28.60 % with respect to a total amount of pigment.

### 3. Present Example 3

100 g of the platelet-shaped substrate (the synthetic mica) was dispersed at around 9 % in water and a temperature thereof was raised to a temperature between 70 and 80 °C. A dilute solution of iron salt was added dropwise to the dispersed substrate in the heated state along with counter ions such that pH thereof is maintained in a range from 2.5 to 3.5. In this regard, a coated amount of the iron salt was about 25 to 35 % based on iron oxide, and coating was carried out within the above range until the pigment exhibits a desired color. Thereafter, a dilute solution of cobalt salt was added dropwise to the product along with counter ions such that pH thereof is in a range from 8.0 to 9.5, which is a basic condition. In this regard, a coated amount of cobalt is 15 to 25 % based on oxide for the pigment to exhibit a desired color. In addition, to generate copper oxide, which is an NIR reflection layer, a dilute solution of copper salt was added dropwise to the product along with counter ions such that pH thereof is in a range from 7.0 to 9.0, which is a basic condition, from a neutral condition so as to coat the product for an amount of copper oxide in the final pigment to be about 20 to 30 %. The reaction solution was washed with water, dehydrated, and heat-treated at 800 °C.

In the pigment according to Present Example 3 prepared as above, Fe₂O₃ is coated on the platelet-shaped substrate (the synthetic mica), Co₃O₄ is coated on the Fe₂O₃, and CuO is coated on the Co₃O₄.

### Evaluation of physical properties of Present Examples

### 1. Pigment surface observation

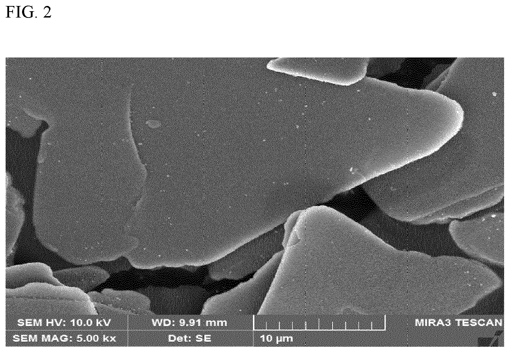

A surface of the near-infrared reflective functional pigment prepared in the above-described manner was observed with a scanning electron microscope. Surfaces of the pigments according to Present Examples 1 to 3 are shown in FIGS. 2 to 4, respectively.

Referring to FIG. 2, a SEM picture of the pigment according to Present Example 1 is shown.

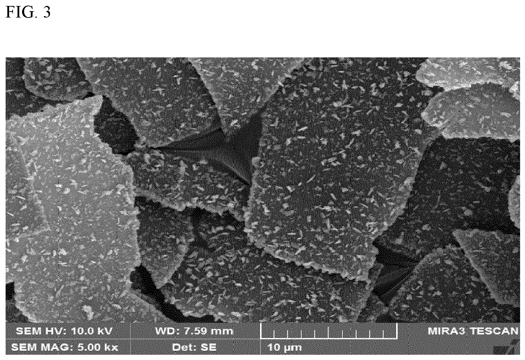

In addition, referring to FIG. 3, a SEM picture of the pigment according to Present Example 2 is shown. It may be seen that the CuO is coated in the island shape.

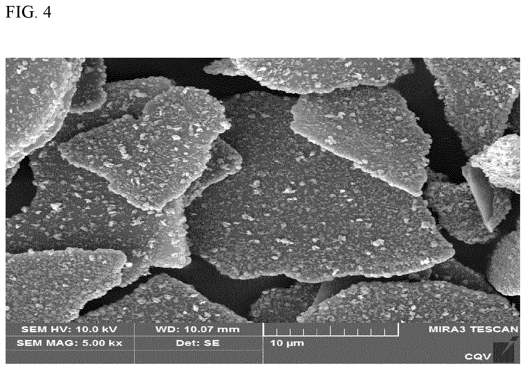

In addition, referring to FIG. 4, a SEM picture of the pigment according to Present Example 3 is shown.

Referring to FIGS. 2 to 4, it may be seen that metal oxides are coated on the platelet-shaped substrate.

### 2. Reflectance, brightness, and chroma analysis

Reflectance and brightness and chroma of the pigments according to Present Examples were analyzed.

A coating film was formed on an OHP film with a wet thickness of 150 *µ*m by mixing the pigment to transparent acrylic resin at a concentration of 12 % and then was sufficiently dried at a room temperature to measure reflectance for each wavelength of the pigment using a UV-Vis spectrometer with barium sulfate as a reference material.

A coating film was formed on an opacity chart with a thickness of 100 *µ*m by mixing the pigment to the transparent acrylic resin at a concentration of 6 % and then was sufficiently dried at the room temperature to measure brightness and chroma at 25° using a color difference meter.

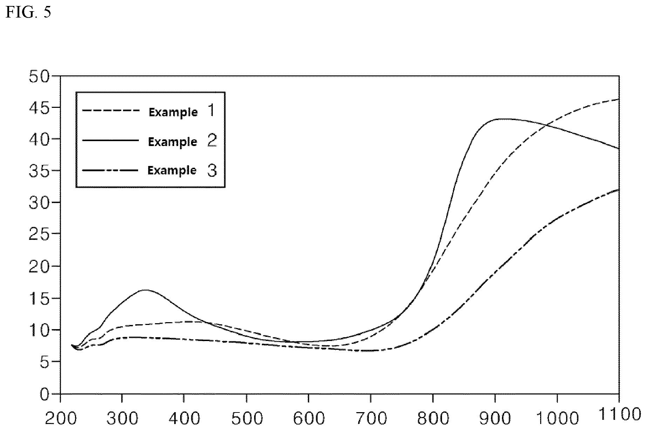

Reflectance for each wavelength of the pigment of each Present Example is shown in FIG. 5. In addition, result values for 905 nm reflectance, brightness, and chroma of the pigment of each Present Example are listed in Table 1 below.

**[Table 1]**

| | Reflectance (%) | Brightness and chroma | | |
|---|---|---|---|---|
| | 905 nm | L* | a* | b* |
| Present Example 1 | 35.209 | 23.34 | -1.42 | -6.75 |
| Present Example 2 | 43.045 | 24.56 | 2.88 | -4.98 |
| Present Example 3 | 19.486 | 21.38 | -1.6 | -1.51 |

Referring to FIG. 5 and Table 1, it may be seen that the pigments of Present Examples 1 and 2 show reflectance equal to or greater than 30 % on average for the near-infrared rays having the wavelength in the range from 850 to 950 nm.

In particular, at the wavelength of 905 nm, Present Example 1 shows reflectance of 35 % and Present Example 2 shows reflectance of 43 %, confirming that the pigments of Present Examples 1 and 2 may be used as the pigment that may be detected by the LiDAR.

In addition, it may be seen that the pigments of Present Examples 1 and 2 have reflectance equal to or smaller than 15 % on average in a visible ray wavelength range (400 to 700 nm).

In addition, referring to Table 1 and FIG. 4, in the measurement results for the brightness, both Present Examples 1 and 2 have an L* value equal to or smaller than 35.

However, in Present Example 3, it is shown that, although the coating was performed using both Co and Cu, reflectance for the near-infrared ray with the wavelength of 905 nm is smaller than 30 %.

Taken together, it may be seen that, even when the pigment is prepared using the component exhibiting the dark color and the component reflecting the near-infrared ray, the pigment does not necessarily have the reflectance equal to or greater than 30 % for the near-infrared ray of 905 nm.

It may be seen that, to reflect the near-infrared ray of 905 nm at a ratio equal to or greater than a certain rate while having the dark color, the number of coating layers coated on the platelet-shaped substrate, the selection of the components, and the ratio of the components constituting the respective coating layers are important factors.

As such, it may be seen that, because the pigment according to the present disclosure has the reflectance equal to or greater than 30 % for the near-infrared rays while having the dark color, the pigment may be used as the pigment that may be detected by the LiDAR.

Although embodiments of the present disclosure have been described with reference to the accompanying drawings, the present disclosure may not be limited to the above embodiments and may be modified in various different forms. Those skilled in the art to which the present disclosure belongs will be able to understand that the present disclosure may be implemented in other specific forms without changing the technical spirit or essential characteristics thereof. Therefore, the embodiments described above should be understood as illustrative in all respects and not limiting.

## Claims

1. A near-infrared reflective functional effect pigment comprising:
a platelet-shaped substrate;
a first metal oxide layer coated on at least a portion of the substrate and having a refractive index equal to or greater than 1.8; and
a second metal oxide layer coated on at least a portion of the first metal oxide layer and containing an absorbent material,
wherein the pigment reflects IR electron rays in a range from 850 to 950 nm in an amount equal to or greater than 30 % on average.

2. The near-infrared reflective functional effect pigment of claim 1, wherein the first metal oxide layer contains Fe₂O₃,
wherein the second metal oxide layer contains Co₃O₄,
wherein a ratio of a content of Fe contained in the first metal oxide layer to a content of Co contained in the second metal oxide layer is in a range from 1:0.5 to 1:1.

3. The near-infrared reflective functional effect pigment of claim 1, wherein the first metal oxide layer contains TiOz and SnOz,
wherein the second metal oxide layer contains CuO,
wherein a ratio of contents of Ti and Sn contained in the first metal oxide layer to a content of Cu contained in the second metal oxide layer is in a range from 1:4 to 1:6.

4. The near-infrared reflective functional effect pigment of claim 1, wherein the pigment has a blackness L* equal to or smaller than 35,
wherein the pigment reflects visible electron rays in an amount equal to or smaller than 15 % on average.

5. The near-infrared reflective functional effect pigment of claim 1, wherein the platelet-shaped substrate is a plate-shaped material containing at least one selected from a group consisting of synthetic mica, natural mica, glass flake, plate-shaped glass, plate-shaped iron oxide, plate-shaped alumina, plate-shaped silica, plate-shaped aluminum, and plate-shaped TiOz.

6. A near-infrared reflective functional paint comprising:
a binder; and
a near-infrared reflective functional pigment,
wherein the pigment includes:
a platelet-shaped substrate;
a first metal oxide layer coated on at least a portion of the substrate and having a refractive index equal to or greater than 1.8; and
a second metal oxide layer coated on at least a portion of the first metal oxide layer and containing an absorbent material,
wherein the pigment reflects IR electron rays in a range from 850 to 950 nm in an amount equal to or greater than 30 % on average.

7. The near-infrared reflective functional paint of claim 6, wherein the first metal oxide layer contains Fe₂O₃,
wherein the second metal oxide layer contains Co₃O₄,
wherein a ratio of a content of Fe contained in the first metal oxide layer to a content of Co contained in the second metal oxide layer is in a range from 1:0.5 to 1:1.

8. The near-infrared reflective functional paint of claim 6, wherein the first metal oxide layer contains TiOz and SnOz,
wherein the second metal oxide layer contains CuO,
wherein a ratio of contents of Ti and Sn contained in the first metal oxide layer to a content of Cu contained in the second metal oxide layer is in a range from 1:4 to 1:6.

9. The near-infrared reflective functional paint of claim 6, wherein the paint has a blackness L* equal to or smaller than 35,
wherein the paint reflects visible electron rays in a range from 400 to 700 nm in an amount equal to or smaller than 1 % on average.

10. The near-infrared reflective functional paint of claim 6, wherein the platelet-shaped substrate is a plate-shaped material containing at least one selected from a group consisting of synthetic mica, natural mica, glass flake, plate-shaped glass, plate-shaped iron oxide, plate-shaped alumina, plate-shaped silica, plate-shaped aluminum, and plate-shaped TiOz.

11. A panel coated with a near-infrared reflective functional paint, wherein the paint includes a binder and a near-infrared reflective functional pigment,
wherein the pigment includes:
a platelet-shaped substrate;
a first metal oxide layer coated on the substrate and having a refractive index equal to or greater than 1.8; and
a second metal oxide layer coated on the first metal oxide layer and containing an absorbent material,
wherein the pigment reflects IR electron rays in a range from 850 to 950 nm in an amount equal to or greater than 30 % on average,
wherein the panel is able to be detected by a light detection and ranging (LiDAR).

12. The panel of claim 11, wherein the panel is applied to an exterior of a vehicle.
